(19)

**Europäisches Patentamt**
**European Patent Office**
**Office européen des brevets**

(11) **EP 4 761 450 A1**

(12) **EUROPEAN PATENT APPLICATION**
published in accordance with Art. 153(4) EPC

(43) Date of publication:
**17.06.2026 Bulletin 2026/25**

(21) Application number: **24852401.9**

(22) Date of filing: **09.08.2024**

(51) International Patent Classification (IPC):
*H04W 74/0833* (2024.01)   *H04W 74/00* (2009.01)
*H04W 52/24* (2009.01)   *H04W 52/32* (2009.01)
*H04W 72/231* (2023.01)   *H04W 56/00* (2009.01)
*H04W 72/0457* (2023.01)   *H04L 5/00* (2006.01)

(52) Cooperative Patent Classification (CPC):
**H04L 5/00; H04W 52/24; H04W 52/32;**
**H04W 56/00; H04W 72/0457; H04W 72/231;**
**H04W 74/00; H04W 74/0833**

(86) International application number:
**PCT/KR2024/011887**

(87) International publication number:
**WO 2025/034048 (13.02.2025 Gazette 2025/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.08.2023 KR 20230104968**

(71) Applicant: **LG Electronics Inc.**
**Yeongdeungpo-gu**
**Seoul 07336 (KR)**

(72) Inventors:
• **GO, Seongwon**
  **Seoul 06772 (KR)**
• **KANG, Jiwon**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING AND RECEIVING RANDOM ACCESS CHANNEL**

(57)    A method according to an embodiment of the present disclosure comprises receiving a PDCCH order and transmitting a PRACH. A PL-RS for the PRACH is indicated based on a value of a 1-bit indicator field in the PDCCH order. Based on the value of the 1-bit indicator field being 0, a DL RS related to a DM-RS of the PDCCH order is indicated as the PL-RS. Based on the value of the 1-bit indicator field being 1, SS/PBCH block based on the PDCCH order is indicated as the PL-RS.

【FIG. 3】

```
        ┌─────────┐
        │  Start  │
        └────┬────┘
             │
  ┌──────────────────────────┐
  │  PDCCH order reception   │───── S310
  └──────────┬───────────────┘
             │
  ┌──────────────────────────┐
  │   PRACH transmission     │───── S320
  └──────────┬───────────────┘
             │
        ┌────┴────┐
        │   End   │
        └─────────┘
```

EP 4 761 450 A1

**Description**

[TECHNICAL FIELD]

The present disclosure relates to a method and device for transmitting and receiving a random access channel.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In the existing LTE and NR standards, in uplink timing advance configuration/indication, a single timing advance (TA) value is supported for a timing advance group (TAG) to which a specific cell or a group of cells belongs.

Multiple-DCI based Multiple-Transmission and Reception Point (M-DCI based M-TRP) operation may be performed in an environment where there is a large distance difference between a UE and different TRPs. In this case, a propagation delay difference, a slot boundary difference, and an inter-UE panel delay difference may occur between target TRPs of uplink transmission within CC/BWP. In particular, this phenomenon may occur to a greater extent in a non-ideal backhaul operation in which coordination is not performed between TRPs.

As described above, in order to compensate for the timing difference or delay that occurs between the TRPs, uplink timing needs to be determined differently for each TRP. To this end, an operation of connecting/corresponding the TAG to a TCI state of unified TCI (e.g., joint TCI state, separate TCI state (DL TCI state or UL TCI state)) has been agreed. To support TRP-specific TA (i.e., to support two TAs for two TRPs), two TAGs may be configured within one serving cell.

PDCCH ordered PRACH is used for two TA acquisition. According to the existing standard, the QCL source used when receiving PDCCH order (DCI) is used as a pathloss-reference signal (PL-RS) for PRACH transmission.

[DISCLOSURE]

[TECHNICAL PROBLEM]

As described above, a conventional method of determining a PL-RS for PRACH may cause the following problems. In two TAG operation, cross-TRP PRACH triggering may be supported, in which a specific TRP transmits a PRACH for another TRP. In this case, if the conventional method of determining the PL-RS is used, a PL-RS mismatch may occur.

More specifically, a TRP (e.g., TRP 1) related to PDCCH order reception may be different from a TRP (e.g., TRP 2) related to PRACH transmission triggered by the corresponding PDCCH order. In this case, if the PL-RS is determined based on a QCL source related to the PDCCH order reception in accordance with the conventional method, the PL-RS may not be suitable for determining transmission power for the triggered PRACH transmission.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) according to an embodiment of the present disclosure comprises receiving a Physical Downlink Control CHannel (PDCCH) order related to an initiation of a random access procedure and transmitting a Physical Random Access Channel (PRACH).

A PathLoss-Reference Signal (PL-RS) for the PRACH is indicated based on a value of a 1-bit indicator field in the PDCCH order.

Based on the value of the 1-bit indicator field being 0, a DownLink Reference Signal (DL RS) related to a DeModulation-Reference Signal (DM-RS) of the PDCCH order is indicated as the PL-RS.

Based on the value of the 1-bit indicator field being 1, a Synchronization Signal/Physical Broadcast Channel block (SS/PBCH block) based on the PDCCH order is indicated as the PL-RS.

A transmission power for the PRACH may be determined based on a pathloss (PL). The PL may be determined based on the DL RS or the SS/PBCH block.

The DL RS may be quasi-collocated with the DM-RS of the PDCCH order.

The SS/PBCH block may be indicated by an SS/PBCH index field of the PDCCH order.

The method may further comprise receiving first configuration information. A first Timing Advance Group (TAG) ID and a second TAG ID may be configured based on the first configuration information.

The method may further comprise receiving second configuration information. First COntrol REsource SETs (CORESETs) related to a first CORESET pool index and second CORESETs related to a second CORESET pool index may be configured based on the second configuration information.

Based on information related to an additional Physical Cell Identity (PCI) being not configured, the PL-RS may be indicated based on the value of the 1-bit indicator field.

Information related to an additional Physical Cell Identity (PCI) may be configured. Based on the PRACH being related to a PCI of a serving cell, the PL-RS may be based on the DL RS. Based on the PRACH being related to the additional PCI, the PL-RS may be based on the SS/PBCH block.

The PCI of the serving cell may be related to the reception of the PDCCH order. The additional PCI may be different from the PCI of the serving cell.

The PRACH may be related to i) an inter-cell multi-TRP operation or ii) an intra-cell multi-TRP operation.

The random access procedure may be a contention-free random access (CFRA) procedure triggered by the PDCCH order.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories. The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station according to another embodiment of the present disclosure comprises transmitting a Physical Downlink Control CHannel (PDCCH) order related to an initiation of a random access procedure and receiving a Physical Random Access Channel (PRACH).

A PathLoss-Reference Signal (PL-RS) for the PRACH is indicated based on a value of a 1-bit indicator field in the PDCCH order.

Based on the value of the 1-bit indicator field being 0, a DownLink Reference Signal (DL RS) related to a DeModulation-Reference Signal (DM-RS) of the PDCCH order is indicated as the PL-RS.

Based on the value of the 1-bit indicator field being 1, a Synchronization Signal/Physical Broadcast Channel block (SS/PBCH block) based on the PDCCH order is indicated as the PL-RS.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

[ADVANTAGEOUS EFFECTS]

According to embodiments of the present disclosure, a PL-RS for PRACH is indicated based on a 1-bit indicator field of PDCCH order. Since the PL-RS for the PRACH is dynamically indicated along with a trigger of the PRACH transmission, the PL-RS mismatch problem described above can be resolved.

The transmission power for the PRACH transmission is determined based on the indicated PL-RS, and thus the PRACH transmission for TA acquisition can be performed at the most appropriate transmission power.

Therefore, when two TAGs related to a serving cell are configured, the accuracy of TA related to each TAG can be improved. More specifically, when cross-TRP PRACH triggering is performed based on the PDCCH order, the accuracy of the TA can be improved compared to a conventional method using a predefined PL-RS.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates MAC RAR according to an embodiment of the present disclosure.
FIG. 2 illustrates a timing advance command MAC CE according to an embodiment of the present disclosure.
FIG. 3 is a flowchart illustrating a method performed by a user equipment according to an embodiment of the present disclosure.
FIG. 4 is a flowchart illustrating a method performed by a base station according to another embodiment of the present disclosure.
FIG. 5 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Multi-Transmission/Reception Point (M-TRP) related operation

An M-TRP transmission scheme in which M TRPs transmit data to one user equipment (UE) may be divided into two main types, eMBB M-TRP transmission which is a scheme for increasing a transmission rate and URLLC M-TRP transmission which is a scheme for increasing a reception success rate and reducing latency.

UL MTRP-URLLC means that multiple TRPs receive the same data/UCI from one UE using different layer/time/frequency resources. For example, TRP 1 receives the same data/UCI from UE in resource 1, and TRP 2 receives the same data/UCI from UE in resource 2, and then shares the received data/UCI through the backhaul link connected between TRPs. A UE configured with the UL MTRP-URLLC transmission scheme transmits the same data/DCI using different layer/time/frequency resources. In this case, the UE is indicated by the BS which Tx beam and which Tx power (i.e., UL TCI state) to use in the layer/time/frequency resources transmitting the same data/DCI. For example, when the same data/UCI is transmitted in resource 1 and resource 2, the UL TCI state used in resource 1 and the UL TCI state used in resource 2 are indicated. The UL MTRP URLLC may be applied to the PUSCH/PUCCH.

SDCI or MDCI based MTRP Transmission

From a perspective of downlink control information (DCI) transmission, an M-TRP (multiple TRP) transmission scheme may be classified into i) a multiple-DCI (M-DCI) based M-TRP transmission scheme in which each TRP transmits different DCI and ii) a single DCI (S-DCI) based M-TRP transmission scheme in which one TRP transmits DCI.

R16 NR MTRP Transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a method in which each TRP schedules and transmits PDSCH via DCI. That is, TRP 1 transmits PDSCH 1 via DCI 1, and TRP 2 transmits PDSCH 2 via DCI 2. When the PDSCH 1 and the PDSCH 2 overlap with the same frequency time resource, the two PDSCHs are received for the same RE, thereby increasing resource efficiency and increasing transmission capacity. To this end, the R16 standard has introduced a CORESET pool which is a group of multiple CORESETs, and the TRP 1 transmits PDCCH through a CORESET belonging to CORESET pool 0, and PDSCH scheduled by the corresponding PDCCH is also transmitted by the TRP 1. The TRP 2 transmits PDCCH through a CORESET belonging to CORESET pool 1, and PDSCH scheduled by the corresponding PDCCH is also transmitted by the TRP 2. For PUSCH, a specific TRP may schedule transmission of the PUSCH to a UE through a CORESET belonging to each COERSET pool. For PUCCH, the TRP 1 schedules some PUCCH resources to receive UCI, and the TRP 2 schedules remaining PUCCH resources to receive UCI. For the PUSCH or the PUCCH, channels scheduled/used by each TRP are TDMed with each other and do not overlap. Hence, an increase in the transmission capacity cannot be expected, but the UE can transmit independently the PUSCH/PUCCH to each of the TRP 1 and the TRP 2.

In addition, the UE may recognize PUSCH (or PUCCH) scheduled by DCI received via different CORESETs (or CORESETs belonging to different CORESET groups) as PUSCH (or PUCCH) transmitting to different TRPs, or recognize PUSCH (or PUCCH) of different TRPs. A scheme for UL transmission (e.g. PUSCH/PUCCH) transmitting to the different TRPs can be applied equally to UL transmission (e.g., PUSCH/PUCCH) transmitting to different panels belonging to the same TRP.

CORESET group IDs (or COERSET pool indexes with the same meaning) described/mentioned in the present disclosure may mean indexes/identification information (e.g. ID), etc. for distinguishing CORESETs for each TRP/panel. In addition, the CORESET group may be a group/union of CORESETs classified by indexes/identification information (e.g. ID)/CORESET group IDs, etc. for distinguishing the CORESETs for each TRP/panel. For example, the CORESET group ID may be specific index information defined in CORSET configuration. For example, the CORESET group may be configured/indicated/defined by an index defined in the CORESET configuration for each CORESET. And/or, the CORESET group ID may mean an index/identification information/indicator, etc. for distinguishing/identifying CORESETs configured/related to each TRP/panel, and the CORESET group ID described/mentioned in the present disclosure can be replaced and expressed with a specific index/specific identification information/specific indicator, etc. for distinguishing/identifying CORESETs configured/related to each TRP/panel. The CORESET group ID, i.e., a specific index/specific identification information/specific indicator for distinguishing/identifying CORESETs configured/related to each TRP/panel may be configured/indicated via higher layer signaling (e.g., RRC signaling)/L2 signaling (e.g., MAC-CE)/L1 signaling (e.g., DCI), and the like. For example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be managed/controlled separately for each TRP/panel in units of the corresponding CORESET group, and/or HARQ A/N (process/retransmission) for PDSCH/PUSCH, etc. scheduled for each TRP/panel may be managed in units of the corresponding CORESET group.

For example, higher layer parameter ControlResourceSet IE (information element) is used to configure a time/frequency control resource set (CORESET). For example, the control resource set (CORESET) may be related to detection and reception of downlink control information. The ControlResourceSet IE may include a CORESET related ID (e.g., controlResourceSetID)/an index of a CORESET pool for CORESET (e.g., CORESETPoolIndex)/time/frequency resource configuration of CORESET/TCI information related to CORESET, and the like. For example, the index of the CORESET pool (e.g., CORESETPoolIndex) may be set to 0 or 1. In the description, the CORESET group may correspond to the CORESET pool, and the CORESET group ID may correspond to the CORESET pool index (e.g., CORESETPoolIndex). ControlResourceSet (i.e., CORESET) may be configured via higher layer signaling (e.g., RRC).

<Meaning of TCI state/ beam indication>

In addition, in the methods proposed by the present disclosure below, a meaning of using (/mapping) a specific TCI state (or TCI) when receiving data/DCI/UCI for a certain frequency/time/space resource is as follows.

For DL, using (mapping) the specific TCI state (or TCI) when receiving data/DCI/UCI for the certain frequency/time/space resource may mean estimating a channel from a DMRS using the QCL type and QCL RS indicated by the DL TCI state in the frequency/time/space resources, and receiving/demodulating data/DCI with the estimated channel.

For UL, using (mapping) the specific TCI state (or TCI) when receiving data/DCI/UCI for the certain frequency/-time/spatial resource may mean transmitting/modulating the DMRS and data/UCI by using a Tx beam and/or Tx power indicated by the UL TCI state.

The UL TCI state may contain Tx beam or Tx power information of the UE, and spatial relation info may be configured to the UE through other parameters instead of the TCI state. The UL TCI state may mean spatial relation info of the SRS resource which may be directly indicated by UL grant DCI or is indicated through the SRI field of the UL grant DCI.

Alternatively, the UL TCI state may mean OL Tx power control parameters (j: index for open loop parameters Po & alpha (maximum 32 parameter value sets per cell), q_d: index of DL RS resource for PL measurement (maximum 4 measurements per cell), and 1: closed loop power control process index (maximum 2 processes per cell)) connected to a value indicated through the SRI field of the UL grant DCI. Alternatively, in R17 NR, UL TCI may be indicated using DL grant DCI.

<TRP classification-related extension description>

For convenience of description, the present disclosure is applied to the proposed scheme by assuming cooperative transmission/reception between 2 TRPs, but is extensively applicable to an environment of multi TRPs of 3 or more and also extensively applicable to a multi-panel environment. Different TRPs may be perceived by the UE as different TCI states (related to different CORESET pool indices).

For example, receiving, by the UE, the data/DCI using the first TCI state related to the first CORESET pool index means that the data/DCI is received from TRP 1. For example, transmitting, by the UE, the data/DCI using the first TCI state related to the first CORESET pool index means that the data/DCI is transmitted to TRP 1.

For example, receiving, by the UE, the data/DCI using the second TCI state related to the second CORESET pool index means that the data/DCI is received from TRP 2. For example, transmitting, by the UE, the data/DCI using the second TCI state related to the second CORESET pool index means that the data/DCI is transmitted to TRP 2.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be defined as follows.

Uplink Timing

Uplink frame number $i$ for transmission from the UE shall start $T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}}$ before the start of the corresponding downlink frame at the UE where

- $N_{\mathrm{TA}}$ and $N_{\mathrm{TA,offset}}$ are given by clause 4.2 of [5, TS 38.213], except for msgA transmission on PUSCH where $N_{\mathrm{TA}} = 0$ shall be used.

  $N_{\mathrm{TA,adj}}^{\mathrm{common}}$ given by clause 4.2 of [5, TS 38.213] is derived from the higher-layer parameters TACommon, TACommon-Drift, and TACommonDriftVariation if configured, otherwise $N_{\mathrm{TA,adj}}^{\mathrm{common}} = 0$ ;

  $N_{\mathrm{TA,adj}}^{\mathrm{UE}}$ given by clause 4.2 of [5, TS 38.213] is computed by the UE based on UE position and serving-satellite-ephemeris-related higher-layers parameters if configured, otherwise $N_{\mathrm{TA,adj}}^{\mathrm{UE}} = 0$ .

The $T_{TA}$ may be calculated/determined based on $N_{\mathrm{TA}}$ and $N_{\mathrm{TA,offset}}$. $N_{\mathrm{TA}}$ and $N_{\mathrm{TA,offset}}$ may be configured/applied as follows.

$N_{\mathrm{TA}}$: 1) configuring through a random access response (RAR) and 2) configuring through timing advance command (MAC-CE)

$N_{\mathrm{TA,offset}}$: 1) configuring a specific value per serving cell and 2) applying a pre-defined value based on duplex mode/FR suitably to the serving cell

A method of configuring/applying $N_{\mathrm{TA,offset}}$ and $N_{\mathrm{TA}}$ described above is described in detail below.

$N_{TA,offset}$

Case 1) Method of configuring a specific value per serving cell

For example, a UE may receive configuration information (e.g., ServingCellConfigCommon Information) including information on NTA,offset from a base station. The configuration information may be received based on RRC signaling. Table 1 below shows the configuration information.

【Table 1】

| |
|---|
| − *ServingCellConfigCommon* |
| The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync. |

*ServingCellConfigCommon* **information element**

```
-- ASN1START
-- TAG-SERVINGCELLCONFIGCOMMON-START


ServingCellConfigCommon ::=      SEQUENCE {
    physCellId              PhysCellId                          OPTIONAL,  -- Cond
HOAndServCellAdd,
    downlinkConfigCommon        DownlinkConfigCommon                 OPTIONAL, -
- Cond HOAndServCellAdd
    uplinkConfigCommon         UplinkConfigCommon                  OPTIONAL,  --
Need M
    supplementaryUplinkConfig     UplinkConfigCommon                  OPTIONAL,  --
Need S
    n-TimingAdvanceOffset      ENUMERATED { n0, n25600, n39936 }
OPTIONAL,  -- Need S
                                    (...)

}
-- TAG-SERVINGCELLCONFIGCOMMON-STOP
-- ASN1STOP
```

| |
|---|
| ***n-TimingAdvanceOffset*** |
| The N_TA-Offset to be applied for all uplink transmissions on this serving cell. If the field is absent, the UE applies the value defined for the duplex mode and frequency range of this serving cell. See TS 38.133 [14], table 7.1.2-2. |

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 2 below shows the value of $N_{TA,offset}$.

【Table 2】

<table>
<tr><td colspan="2" align="center">Table 7.1.2-2: The Value of $N_{TA\,offset}$</td></tr>
<tr><td align="center"><strong>Frequency range and band of cell used for uplink transmission</strong></td><td align="center"><strong>$N_{TA\,offset}$ (Unit: T$_C$)</strong></td></tr>
<tr><td>FR1 FDD or TDD band with neither E-UTRA–NR nor NB-IoT–NR coexistence case</td><td>25600 (Note 1)</td></tr>
<tr><td>FR1 FDD band with E-UTRA–NR and/or NB-IoT–NR coexistence case</td><td>0 (Note 1)</td></tr>
<tr><td>FR1 TDD band with E-UTRA–NR and/or NB-IoT–NR coexistence case</td><td>39936 (Note 1)</td></tr>
<tr><td>FR2</td><td>13792</td></tr>
<tr><td colspan="2">[1] Note 1: The UE identifies $N_{TA\,offset}$ based on the information n-TimingAdvanceOffset as specified in TS 38.331 [2]. If UE is not provided with the information n-TimingAdvanceOffset, the default value of $N_{TA\,offset}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{TA\,offset}$ can also be provided for a FDD serving cell.<br><br>[2] Note 2: Void</td></tr>
</table>

$N_{TA}$

Case 1) Method of configuring through a random access response (RAR)

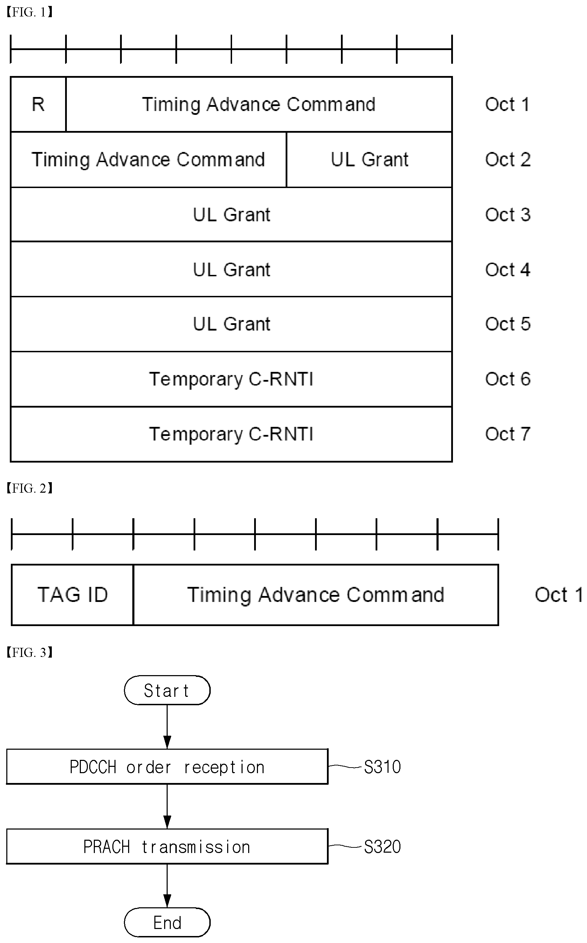

For example, in a random access procedure (e.g., 2-step RACH procedure or 4-step RACH procedure), a UE may receive an RAR from a base station. $N_{TA}$ may be determined/configured based on the RAR. Specifically, the RAR may include a timing advance command. The timing advance command indicates an index value (e.g., index value TA) related to timing adjustment. $N_{TA}$ may be determined based on the index value. The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. MAC payload of the MAC RAR is described in detail below.

6.2.3 MAC payload for Random Access Response

The MAC RAR is of fixed size as depicted in Figure6.2.3-1, and consists of the following fields:

- R: Reserved bit, set to 0;
- TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead;
- Timing Advance Command: The Timing Advance Command field indicates the index value TA used to control the amount of timing adjustment that the MAC entity has to apply in TS 38.213 [6]. The size of the Timing Advance Command field is 12 bits;
- UL Grant: The Uplink Grant field indicates the resources to be used on the uplink in TS 38.213 [6]. The size of the UL Grant field is 27 bits;
- Temporary C-RNTI: The Temporary C-RNTI field indicates the temporary identity that is used by the MAC entity during Random Access. The size of the Temporary C-RNTI field is 16 bits.

The MAC RAR is octet aligned.

Transmission timing adjustments based on the timing advance command are described below.

4.2 Transmission timing adjustments

A UE can be provided a value $N_{TA,offset}$ of a timing advance offset for a serving cell by n-TimingAdvanceOffset for the serving cell. If for a serving cell the UE is provided two coresetPoolIndex values 0 and 1 for first and second CORESETs, or is not provided coresetPoolIndex value for first CORESETs and is provided coresetPoolIndex value of 1 for second CORESETs, the UE can be provided first and second $N_{TA,offset}$ values by n-TimingAdvanceOffset and n-TimingAdvanceOffset2 for transmissions with TCI states associated with the first and second CORESETs, respectively. A UE can be provided a second $N_{TA,offset}$ value for transmissions with spatial domain filters corresponding to TCI states associated with physCellId different from physCellId for the serving cell in addition to a first $N_{TA,offset}$ value for transmissions with spatial domain filters corresponding to TCI states associated with physCellId for the serving cell. The first and second $N_{TA,offset}$ values correspond to first and second TAGs [11, TS 38.321] having an association indicated by tag-Id-ptr with first and second joint TCI states provided by dl-OrJointTCI-StateList or first and second UL TCI states provided by ul-TCI-State-List. If the UE is not provided n-TimingAdvanceOffset for a serving cell, the UE determines a default value $N_{TA,offset}$ of the timing advance offset for the serving cell as described in [10, TS 38.133].

If a UE is configured with two UL carriers for a serving cell, a same timing advance offset value $N_{TA,offset}$ applies to both carriers for transmissions on the serving cell that are associated with a same TAG. The UE does not expect to apply two $N_{TA,offset}$ values for transmissions on the SUL carrier.

Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG.

For a band with synchronous contiguous intra-band EN-DC in a band combination with non-applicable maximum transmit timing difference requirements as described in Note 1 of Table 7.5.3-1 of [10, TS 38.133], if the UE indicates ul-TimingAlignmentEUTRA-NR as 'required' and uplink transmission timing based on timing adjustment indication for a TAG from MCG and a TAG from SCG are determined to be different by the UE, the UE adjusts the transmission timing for PUSCH/SRS/PUCCH transmission on all serving cells part of the band with the synchronous contiguous intra-band EN-DC based on timing adjustment indication for a TAG from a serving cell in MCG in the band. The UE is not expected to transmit a PUSCH/SRS/PUCCH in one CG when the PUSCH/SRS/PUCCH is overlapping in time, even partially, with random access preamble transmitted in another CG.

For a SCS of $2^\mu \cdot 15$ kHz, the timing advance command for a TAG indicates the change of the uplink timing relative to the current uplink timing for the TAG in multiples of $16 \cdot 64 \cdot T_c/2^\mu$. The start timing of the random access preamble is described in [4, TS 38.211].

A timing advance command [11, TS 38.321] in case of random access response or in an absolute timing advance command MAC CE or in a cell switch command, $T_A$, for a TAG indicates $N_{TA}$ values by index values of $T_A = 0, 1, 2, ..., 3846$, where an amount of the time alignment for the TAG with SCS of $2^\mu \cdot 15$ kHz is $N_{TA} = T_A \cdot 16 \cdot 64/2^\mu$. $N_{TA}$ is defined in [4, TS 38.211] and is relative to the SCS of the first uplink transmission from the UE after the reception of the random access response or absolute timing advance command MAC CE or the cell switch command.

In other cases, a timing advance command [11, TS 38.321], $T_A$, for a TAG indicates adjustment of a current $N_{TA}$ value, $N_{TA\_old}$, to the new $N_{TA}$ value, $N_{TA\_new}$, by index values of $T_A = 0, 1, 2, ..., 63$, where for a SCS of $2^\mu \cdot 15$ kHz, $N_{TA\_new} = N_{TA\_old} + (T_A - 31) \cdot 16 \cdot 64/2^\mu$.

If a UE has multiple active UL BWPs, as described in clause 12, in a same TAG, including UL BWPs in two UL carriers of a serving cell, the timing advance command value is relative to the largest SCS of the multiple active UL BWPs. The applicable $N_{TA\_new}$ value for an UL BWP with lower SCS may be rounded to align with the timing advance granularity for the UL BWP with the lower SCS while satisfying the timing advance accuracy requirements in [10, TS 38.133].

Adjustment of an $N_{TA}$ value by a positive or a negative amount indicates advancing or delaying the uplink transmission timing for the TAG by a corresponding amount, respectively.

For a timing advance command received on uplink slot $n$ and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, the corresponding adjustment of the uplink transmission timing applies from the beginning of uplink slot n + $k$ + 1+2$^\mu$ - $K_{offset}$ where $k = \left\lceil N_{slot}^{subframe,\mu} \cdot (N_{T,1} + N_{T,2} + N_{TA,max} + 0.5)/T_{sf} \right\rceil$, $N_{T,1}$ is a time duration in msec of $N_1$ symbols corresponding to a PDSCH processing time for UE processing capability I when additional PDSCH DM-RS is configured, $N_{T,2}$ is a time duration in msec of $N_2$ symbols corresponding to a PUSCH preparation time for UE processing capability 1 [6, TS 38.214], $N_{TA,max}$ is the maximum timing advance value in msec that can be provided by a TA command field of 12 bits, $N_{slot}^{subframe,\mu}$ is the number of slots per subframe, $T_{sf}$ is the subframe duration of 1 msec, and $K_{offset}$ = $K_{cell,offset}$ - $K_{UE,offset}$, where $K_{cell,offset}$ is provided by cellSpecificKoffset and $K_{UE,offset}$ is provided by a Differential Koffset MAC CE command [11, TS 38.321]; otherwise, if not respectively provided, $K_{cell,offset}$ = 0 or $K_{UE,offset}$ = 0. $N_1$ and $N_2$ are determined with respect to the minimum SCS among the SCSs of all configured UL BWPs for all uplink carriers in the TAG and of all configured DL BWPs for the corresponding downlink carriers. For $\mu = 0$, the UE assumes $N_{1,0} = 14$ [6, TS 38.214]. Slot n and $N_{\text{slot}}^{\text{subframe},\mu}$ are determined with respect to the minimum SCS among the SCSs of all configured UL BWPs for all uplink carriers in the TAG. $N_{\text{TA,max}}$ is determined with respect to the minimum SCS among the SCSs of all configured UL BWPs for all uplink carriers in the TAG and for all configured initial UL BWPs provided by initialUplinkBWP. The uplink slot n is the last slot among uplink slot(s) overlapping with the slot(s) of PDSCH reception assuming $T_{TA} = 0$, where the PDSCH provides the timing advance command and $T_{TA}$ is defined in [4, TS 38.211].

If a UE changes an active UL BWP between a time of a timing advance command reception and a time of applying a corresponding adjustment for the uplink transmission timing, the UE determines the timing advance command value based on the SCS of the new active UL BWP. If the UE changes an active UL BWP after applying an adjustment for the uplink transmission timing, the UE assumes a same absolute timing advance command value before and after the active UL BWP change.

If the received downlink timing changes and is not compensated or is only partly compensated by the uplink timing adjustment without timing advance command as described in [10, TS 38.133], the UE changes $N_{\text{TA}}$ accordingly. If a UE operates with two TAGs on an active UL BWP of a serving cell, the UE expects that a difference between a first downlink timing associated with a first TAG and a second downlink timing associated with a second TAG is not larger than the CP length for the active UL BWP unless the UE indicates larger-thanCP-capability. If a UE indicates XYZ_capability, is provided SRS-autonomousTAupdate [10, TS 38.133], and transmits SRS based on a configuration by SRS-PosResourceSet in SRS-PosRRC-InactiveConfig-ValidityArea in RRC_INACTIVE state, the UE may autonomously update $N_{\text{TA}}$ at cell reselection; else, if the UE is not provided SRS-autonomousTAupdate, the UE maintains the $N_{\text{TA}}$ of a last serving cell prior to the release of a dedicated RRC connection [11, TS 38.321].

For operation with single TAG on a serving cell, if two adjacent slots overlap due to a TA command, the latter slot is reduced in duration relative to the former slot. The UE does not change $N_{TA}$ during an actual transmission time window for a PUSCH or a PUCCH transmission [6, TS 38.214]. If the UE is not provided enableSTx2PofMDCI and operates with two TAGs on a serving cell, the UE does not expect transmissions associated with different TAGs to overlap unless the UE indicates XYZ; if the UE indicates XYZ, the UE reduces in duration a latter transmission using a first TAG to avoid overlapping with a former transmission using a second TAG.

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted. The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. A payload of the timing advance command MAC CE is described in detail below.

6.1.3.4 Timing Advance Command MAC CE

The Timing Advance Command MAC CE is identified by MAC subheader with LCID as specified in Table 6.2.1-1.

It has a fixed size and consists of a single octet defined as follows (Figure 6.1.3.4-1):

- TAG Identity (TAG ID): This field indicates the TAG Identity of the addressed TAG. The TAG containing the SpCell has the TAG Identity 0. The length of the field is 2 bits;
- Timing Advance Command: This field indicates the index value TA (0, 1, 2... 63) used to control the amount of timing adjustment that MAC entity has to apply (as specified in TS 38.213 [6]). The length of the field is 6 bits.

6.1.3.4a Absolute Timing Advance Command MAC CE

The Absolute Timing Advance Command MAC CE is identified by MAC subheader with eLCID as specified in Table 6.2.1-1b.

It has a fixed size and consists of two octets defined as follows (Figure 6.1.3.4a-1):

- Timing Advance Command: This field indicates the index value TA used to control the amount of timing adjustment that the MAC entity has to apply in TS 38.213 [6]. The size of the field is 12 bits;
- TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead;

- R: Reserved bit, set to 0.

Timing Advance Group (TAG)

The timing advance group (TAG) refers to a group of serving cells that use the same timing advance value. Table 3 below shows definition of the TAG and configuration information related to the TAG.

【Table 3】

**Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs.

*TAG-Config*

The IE *TAG-Config* is used to configure parameters for a time-alignment group.

**_TAG-Config_ information element**

```
-- ASN1START
-- TAG-TAG-CONFIG-START

TAG-Config ::=          SEQUENCE {
    tag-ToReleaseList          SEQUENCE (SIZE (1..maxNrofTAGs)) OF TAG-Id
OPTIONAL,   -- Need N
    tag-ToAddModList           SEQUENCE (SIZE (1..maxNrofTAGs)) OF TAG
OPTIONAL    -- Need N
}

TAG ::=                 SEQUENCE {
    tag-Id                 TAG-Id,
```

```
    timeAlignmentTimer          TimeAlignmentTimer,
    ...
}

TAG-Id ::=                 INTEGER (0..maxNrofTAGs-1)
```

| **tag-Id** |
| --- |
| Indicates the TAG of the SpCell or an SCell, see TS 38.321 [3]. Uniquely identifies the TAG within the scope of a Cell Group (i.e. MCG or SCG). |
| **timeAlignmentTimer** |
| The timeAlignmentTimer for TAG with ID tag-Id, as specified in TS 38.321 [3]. |
| **maxNrofTAGs**    INTEGER ::= 4 -- Maximum number of Timing Advance Groups |

Procedure

Operations for uplink time alignment are described in detail below.

5.2 Maintenance of Uplink Time Alignment

RRC configures the following parameters for the maintenance of UL time alignment:

- timeAlignmentTimer (per TAG) which controls how long the MAC entity considers the Serving Cells belonging to the associated TAG to be uplink time aligned;
- inactivePosSRS-TimeAlignmentTimer which controls how long the MAC entity considers the Positioning SRS transmission in RRC_INACTIVE in clause 5.26 to be uplink time aligned;
- cg-SDT-TimeAlignmentTimer which controls how long the MAC entity considers the uplink transmission for CG-SDT to be uplink time aligned.

The MAC entity shall:

1> when a Timing Advance Command MAC CE is received, and if an NTA (as defined in TS 38.211 [8]) has been maintained with the indicated TAG:

2> apply the Timing Advance Command for the indicated TAG;
2> if there is ongoing Positioning SRS Transmission in RRC_INACTIVE as in clause 5.26:

3> start or restart the inactivePosSRS-TimeAlignmentTimer associated with the indicated TAG.

2> if CG-SDT procedure triggered as in clause 5.27 is ongoing:

3> start or restart the cg-SDT-TimeAlignmentTimer associated with the indicated TAG.

2> else:

3> start or restart the timeAlignmentTimer associated with the indicated TAG.

1> when a Timing Advance Command is received in a Random Access Response message for a Serving Cell belonging to a TAG or in a MSGB for an SpCell:

2> if the Random Access Preamble was not selected by the MAC entity among the contention-based Random Access Preamble:

3> apply the Timing Advance Command for this TAG;
3> start or restart the timeAlignmentTimer associated with this TAG.

2> else if the timeAlignmentTimer associated with this TAG is not running:

3> apply the Timing Advance Command for this TAG;
3> start the timeAlignmentTimer associated with this TAG;
3> when the Contention Resolution is considered not successful as described in clause 5.1.5; or
3> when the Contention Resolution is considered successful for SI request as described in clause 5.1.5, after transmitting HARQ feedback for MAC PDU including UE Contention Resolution Identity MAC CE:

4> stop timeAlignmentTimer associated with this TAG.

3> when the Contention Resolution is considered not successful as described in clause 5.1.5:

4> if CG-SDT procedure triggered as in clause 5.27 is ongoing:

5> set the NTA value to the value before applying the received Timing Advance Command as in TS 38.211 [8].

3> when the Contention Resolution is considered successful for Random Access procedure while the CG-SDT procedure is ongoing:

> 4> stop timeAlignmentTimer associated with this TAG;
> 4> start or restart the cg-SDT-TimeAlignmentTimer associated with this TAG.

> 3> when the Contention Resolution is considered successful for Random Access procedure while SRS transmission in RRC_INACTIVE is ongoing:

> > 4> start or restart the inactivePosSRS-TimeAlignmentTimer associated with this TAG.

> 2> else:

> > 3> ignore the received Timing Advance Command.

1> when an Absolute Timing Advance Command is received in response to a MSGA transmission including C-RNTI MAC CE as specified in clause 5.1.4a:

> 2> apply the Timing Advance Command for PTAG;
> 2> if there is ongoing Positioning SRS Transmission in RRC_INACTIVE as in clause 5.26:

> > 3> start or restart the inactivePosSRS-TimeAlignmentTimer associated with the indicated TAG.

> 2> if CG-SDT procedure is ongoing:

> > 3> start or restart the cg-SDT-TimeAlignmentTimer associated with PTAG.

> 2> else:

> > 3> start or restart the timeAlignmentTimer associated with PTAG.

1> when the indication is received from upper layer for stopping the inactivePosSRS-TimeAlignmentTimer:

> 2> stop the inactivePosSRS-TimeAlignmentTimer.

1> when the indication is received from upper layer for starting the inactivePosSRS-TimeAlignmentTimer:

> 2> start or restart the inactivePosSRS-TimeAlignmentTimer.

1> when instruction from the upper layer has been received for starting the cg-SDT-TimeAlignmentTimer:

> 2> start the cg-SDT-TimeAlignmentTimer.

1> when instruction from the upper layer has been received for stopping the cg-SDT-TimeAlignmentTimer:

> 2> consider the cg-SDT-TimeAlignmentTimer as expired.

1> when instruction from the upper layer has been received for starting the TimeAlignmentTimer associated with PTAG:

> 2> start the TimeAlignmentTimer associated with PTAG.

1> when a timeAlignmentTimer expires:

> 2> if the timeAlignmentTimer is associated with the PTAG:

> > 3> flush all HARQ buffers for all Serving Cells;
> > 3> notify RRC to release PUCCH for all Serving Cells, if configured;
> > 3> notify RRC to release SRS for all Serving Cells, if configured;

3> clear any configured downlink assignments and configured uplink grants;
3> clear any PUSCH resource for semi-persistent CSI reporting;
3> consider all running timeAlignmentTimers as expired;
3> maintain NTA (defined in TS 38.211 [8]) of all TAGs.

2> else if the timeAlignmentTimer is associated with an STAG, then for all Serving Cells belonging to this TAG:

3> flush all HARQ buffers;
3> notify RRC to release PUCCH, if configured;
3> notify RRC to release SRS, if configured;
3> clear any configured downlink assignments and configured uplink grants;
3> clear any PUSCH resource for semi-persistent CSI reporting;
3> maintain NTA (defined in TS 38.211 [8]) of this TAG.

1> when the inactivePosSRS-TimeAlignmentTimer expires:

2> notify RRC to release Positioning SRS for RRC_INACTIVE configuration(s).

1> when the cg-SDT-TimeAlignmentTimer expires:

2> clear any configured uplink grants;
2> if a PDCCH addressed to the MAC entity's C-RNTI after initial transmission for the CG-SDT with CCCH message has not been received:

3> consider ongoing CG-SDT procedure as terminated;
3> indicate the expiry of cg-SDT-TimeAlignmentTimer to the upper layer.

2> flush all HARQ buffers;
2> maintain NTA (defined in TS 38.211 [8]) of this TAG.

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the timeAlignmentTimer associated with the SCell as expired.

The MAC entity shall not perform any uplink transmission on a Serving Cell except the Random Access Preamble and MSGA transmission when the timeAlignmentTimer associated with the TAG to which this Serving Cell belongs is not running, CG-SDT procedure is not ongoing or SRS transmission in RRC_INACTIVE as in clause 5.26 is not on-going.

Furthermore, when the timeAlignmentTimer associated with the PTAG is not running, CG-SDT procedure is not ongoing and SRS transmission in RRC_INACTIVE as in clause 5.26 is not ongoing, the MAC entity shall not perform any uplink transmission on any Serving Cell except the Random Access Preamble and MSGA transmission on the SpCell.

The MAC entity shall not perform any uplink transmission except the Random Access Preamble and MSGA transmission when the cg-SDT-TimeAlignmentTimer is not running during the ongoing CG-SDT procedure as triggered in clause 5.27. The MAC entity shall not perform any uplink transmission except the Random Access Preamble and MSGA transmission when inactivePosSRS-TimeAlignmentTimer is not running during the procedure for SRS transmission in RRC_INACTIVE as in clause 5.26.

Power control of random access channel

If the UE performs PRACH transmission in the activated UL BWP *b* of the carrier *f* of the serving cell c, the UE may determine PRACH transmission power $P_{PRACH,b,f,c}(i)$ (dBm) at PRACH transmission occasion *i* based on Equation 1 below.

【Equation 1】

$$P_{PRACH,b,f,c}(i) = \min\{P_{CMAX,f,c}, P_{PRACH,target,f,c} + PL_{b,f,c}\} \ [dBm]$$

$P_{CMAX,f,c}(i)$ may represent a configured UE transmission power. For example, the configured UE transmission power may be interpreted as the 'configured maximum UE output power' defined in 3GPP TS 38.101-1 and/or TS38.101-2. Further, $P_{PRACH,target,f,c}$ represents a PRACH target reception power provided via higher layer signaling (e.g., RRC signaling, MAC-CE, etc.) for the activated UL BWP. $PL_{b,f,c}$ represents a pathloss for the activated UL BWP and may be determined based on DL RS associated with PRACH transmission in the activated DL BWP of the serving cell c. For example, the UE may determine a pathloss related to PRACH transmission based on synchronization signal (SS)/physical broadcast channel (PBCH) blocks associated with PRACH transmission.

The contents described above may be applied in combination with methods proposed in the present disclosure to be described below or may be supplemented to clarify technical features of the methods proposed in the present disclosure. Methods to be described below are just distinguished for convenience of description and it is needless to say that some components of any one method may be substituted with some components of another method or may be applied in combination with each other.

According to 3GPP standards up to NR Rel-17, timing advance (TA) setting for UE uplink transmission of the base station to compensate for the propagation delay between the base station and the UE may be performed through higher layer signaling. Further, a TA for a specific group of cell(s) may be set/managed separately through a concept/definition of a timing advance group (TAG).

Up to now, a method of supporting multiple TA values within a specific cell has not been supported. However, considering a scenario in which there is a large difference in distance from different target TRPs to the UE upon M-TRP UL transmission, enhancement will be performed so that a plurality of (two) TA values can be set/indicated in a specific CC/BWP.

In this case, it is necessary to discuss how the base station configures/indicates the plurality of TA values to the UE or/and how a connection relationship between the plurality of TA values and UE UL channel/RS is performed. As described in Rel-18 MIMO WID objective (RP-213598) of Table 4 below, the configuration of TA values for multi-DCI (M-DCI) based M-TRP operation is considered.

[Table 4]

| |
|---|
| 5. Study, and if justified, specify the following<br>- Two TAs for UL multi-DCI for multi-TRP operation<br>- Power control for UL single DCI for multi-TRP operation where unified TCI framework extension in objective 2 is assumed. |
| For the case of simultaneous UL transmission from multiple panels, the operation will only be limited to the objective 6 scenarios. |

Here, the TA (TA value) may be based on the description of FIG. 2 and the contents described in the timing advance (TA) related procedure described above.

In RAN1 and RAN2 standards prior to Rel-18, the base station manages UE TA values through values called NTA and NTA,offset. The base station may set NTA as follows. The base station may i) set NTA via RAR MAC CE or ii) set NTA via timing advance command MAC CE (TA command MAC CE). In addition, the base station may utilize the concept of the Timing Advance Group (TAG) to configure up to 4 TAGs per UE for a specific cell or cell combination and perform update/management of an NTA value for each TAG.

As described in WID, a scenario to support two TA values is M-DCI based M-TRP operation. In the M-DCI based M-TRP operation, each TRP may be classified based on CORESET pool indexes associated with CORESET(s) existing in a BWP. Based on the CORESET pool indexes, each TRP may be classified into i) a TRP performing DL transmission (i.e., PDCCH, PDSCH) or/and ii) a target TRP for UL transmission. For example, CORESET 0 and 1 set to CORESET pool index 0 may correspond to TRP 1, and CORESET 2 and 3 set to CORESET pool index 1 may correspond to TRP 2.

In Rel-18 MIMO, the following agreements were reached regarding two Tas.

Agreement

Enhancements on two TAs for UL multi-DCI for multi-TRP operation are applicable to both FR1 and FR2.

Agreement

For multi-DCI based multi-TRP operation with two TAs, support configuring two TAGs belonging to a serving cell.

Agreement

For multi-DCI multi-TRP operation with two TAs, up to two n-TimingAdvanceOffset value per serving cell is supported

Agreement

For multi-DCI multi-TRP operation with two TAs in a CC, two DL reference timings are supported where each DL reference timing is associated with one TAG

baseline assumption is that the Rx timing difference between the two DL reference timings is no larger than CP length as an optional UE capability, Rx timing difference between the two DL reference timings can be assumed to be larger than CP length

FFS: the maximum Rx timing difference (could be up to RAN4)
Other than UE capability details and relevant configuration, no additional RAN1 specification enhancement specific for this case is expected

Agreement

Multi-DCI multi-TRP operation with two TAs is supported for Rel-15/16/17 TCI frameworks and unified TCI framework extension discussed in 9.1.1.1 as well as UL beam indication via spatial relation.

Agreement

For multi-DCI based Multi-TRP operation with two TA enhancement, support CFRA triggered by PDCCH order for both intra-cell and inter-cell cases.

**Agreement**

For multi-DCI based Multi-TRP operation with two TA enhancement, support at least RAR-based solution where RAR is only received from a TRP that is associated with Type 1 CSS

RAR based

FFS: RAR-less solution reusing the solution agreed in Rel-18 Mobility Enh

**Agreement**

For associating TAGs to target UL channels/signals for multi-DCI based multi-TRP operation, the baseline feature is revised as follows:
UE expects that the [activated] UL/joint TCI states [of UL signals/channels] associated to one CORESET Pool Index correspond to one TAG

Association of TAG ID with UL/joint TCI state is via RRC configuration

Above does not impact the association of the indicated TCI states and coresetPoolIndex values as agreed in previous meetings in **9.1.1.1.**

**Agreement**

For multi-DCI based Multi-TRP operation with two TA enhancement, support the case where a PDCCH order sent by one TRP triggers RACH procedure towards either the same TRP or a different TRP at least for inter-cell Multi-DCI.

FFS: for intra-cell Multi-DCI
FFS: whether there are any restrictions needed
FFS: if cross TRP RACH triggering is an optional feature

**Working Assumption**

For intra-cell multi-DCI based Multi-TRP operation with two TA enhancement, support the case where a PDCCH order sent by TRPX triggers RACH procedure towards either TRPX or TRPY.

FFS: details of PRACH power control

Conclusion

For inter-cell multi-DCI based multi-TRP operation with two TA enhancement, there is no consensus to introduce additional type 1 CSS configuration per additional PCI.

**Agreement**

Confirm the following working assumption:

For multi-DCI based inter-cell Multi-TRP operation with two TA enhancement, one additional PRACH configuration is supported for each configured additional PCI
the additional PRACH configuration is used in a RACH procedure triggered by a PDCCH order for the corresponding configured additional PCI

**Agreement**

For intercell multi-DCI based Multi-TRP operation with two TA enhancement, support indication of which PRACH configuration to be used in the RACH procedure in the PDCCH order.

FFS: Whether additionalPCI or a generic identifier is indicated in PDCCH order
FFS: The detail of the indication in PDCCH order in terms of whether to support PRACH triggered for inactive additionalPCI.

As described above, it was discussed that two TAGs can be configured to manage two TA values in one serving cell, and it was also agreed that a reference timing to apply the TA value managed in each TAG would support two DL reference timings in one serving cell.
In addition, it was agreed that the PDCCH ordered CFRA mechanism would be utilized for the two TA acquisition. Discussions were held about uplink resources and a connection relationship between the two TAs as to which uplink transmissions the two acquired TAs (TAGs) should be utilized for. As a result, it was agreed to associate the TAG ID with the UL and/or joint TCI state for the association between the two TAGs configured within the serving cell and the UL channel/RS, as in the agreement. It was decided to support a cross-TRP RACH triggering operation in which a specific TRP can trigger a RACH toward another TRP to the UE through a PDCCH order. However, in this case, since a TRP triggering the RACH transmission and the TRP receiving a RACH are different, there may be a problem in a method (hereinafter referred to as a method of determining a PL-RS of legacy PDCCH-ordered RACH) of using a pathloss reference RS (hereinafter referred to as PL-RS) for determining PRACH power when transmitting PDCCH-ordered RACH according to the existing standard as a QCL source (based on the DL-RS that is the QCL source of the DMRS of PDCCH order) used when receiving the PDCCH order. This can be seen as a PL-RS mismatch problem that occurs because, in the cross-TRP RACH triggering, a target TRP of the RACH transmission is different from the TRP triggering the RACH transmission, whereas in the existing standards, a DL-RS of the TRP triggering the RACH transmission is applied as the PL-RS to be used for the RACH transmission. In the current standardization discussion, a proposal is being discussed to utilize an SSB index indicated by the PDCCH order as the PL-RS when performing the cross-TRP RACH triggering to resolve the PL-RS mismatch (see Table 5 below).

[Table 5]

> **Proposal 10.2**
> *For multi-DCI based inter-cell multi-TRP [and intra-cell multi-TRP] operation with two TAGs configured in a CC, when a PDCCH order sent by TRPx triggers RACH procedure towards TRP$_Y$ (X≠Y), the SSB indicated in the CFRA based PDCCH order is used as the PL-RS for determining the transmit power of the triggered PRACH transmission*
> *Note: the above applies to at least inter-cell multi-TRP case involving TRP associated with active Additional PCI*
> *Note: UE expects the SSB indicated has to a known PL-RS as defined in 38.133*

In the above proposal, when CORESET pool index 1 in a specific CC/BWP of the UE is related to an additional PCI (not a serving cell) configured to the UE, this is called an inter-cell M-DCI-based M-TRP operation. In this case, it was agreed that when triggering a RACH with a PDCCH order, an indication can be provided as to whether to trigger the serving cell or the additional PCI (not the serving cell).

Accordingly, when the UE receives the PDCCH order from the serving cell/additional PCI, it can determine whether or not the PRACH triggered by the PDCCH order is cross-TRP RACH triggering. Specifically, in an inter-cell M-DCI-based M-TRP environment, the UE may operate as follows.

In the cross-TRP RACH triggering as in the above proposal, the UE does not perform the PL-RS determination method according to the existing method (Method i: PL-RS determination method of legacy PDCCH-ordered RACH). The UE may perform an enhanced PL-RS determination method (Method ii: enhanced PL-RS determination method of PDCCH-ordered RACH). Specifically, the UE may use an SSB index indicated based on the PDCCH order as the PL-RS. That is, the UE may use an SSB index indicated based on the PDCCH order as the PL-RS.

However, in an intra-cell M-DCI based M-TRP environment where all two CORESET pools are configured within a serving cell, the following problems exist. Specifically, since per-TRP SSB grouping, etc. do not exist in the intra-cell M-DCI based M-TRP environment, the UE cannot know a target TRP (/CORESET pool index) when transmitting a PDCCH-ordered RACH. Hence, the UE cannot know whether the RACH transmission is due to the cross-TRP RACH triggering or not.

A method of determining a PathLoss-Reference Signal (PL-RS) for PDCCH-ordered RACH transmission when multiple TAs are supported in a specific CC/BWP(s) of a UE is described in detail below.

In the present disclosure, "/" may be interpreted as "and," "or," or "and/or" depending on the context.

Proposal 1

If two TA operation is supported in a specific CC/BWP of a UE, a PL-RS for a PDCCH-ordered RACH may be configured/activated/instructed as follows. For example, a base station may configure/activate/indicate a PL-RS based on method i) or a PL-RS based on method ii) to the UE.

Method i: PL-RS determination method of legacy PDCCH-ordered RACH
Method ii: Enhanced PL-RS determination method of PDCCH-ordered RACH

The PL-RS for PDCCH-ordered RACH transmission may be determined as follows.

According to the method i, the PL-RS may be determined based on a QCL source used when receiving a PDCCH order. In this case, the QCL source may mean a DL RS related to a DMRS of the PDCCH order.

According to the method ii, the PL-RS may be determined based on an SSB index indicated in the PDCCH order. In other words, the PL-RS may be determined based on an SSB (i.e., SS/PBCH block) based on the PDCCH order.

For example, the configuration/activation/indication may be performed based on RRC signaling. Specifically, a configuration for the method i or the method ii may be transmitted to the UE based on the RRC signaling. That is, a switching configuration for the method i or the method ii may be performed based on the RRC signaling.

For example, the configuration/activation/indication may be performed based on MAC CE signaling. Specifically, activation/deactivation for the method i or the method ii may be performed based on the MAC CE signaling. More specifically, the base station may transmit an MAC CE related to the activation/deactivation for the method i or the method ii to the UE.

For example, the configuration/activation/indication may be performed based on DCI. Specifically, the base station may transmit DCI including an indication for the method i or the method ii to the UE. That is, switching for the method i or the method ii may be indicated based on the DCI. More specifically, the indication may be based on a 1-bit indicator field in the PDCCH order (DCI payload) that triggers the RACH. The PDCCH order may include the 1-bit indicator field representing the method i or the method ii. Values (e.g., {'0', '1'} or {'1', '0'}) of the 1-bit indicator field may be mapped to a PL-RS determined based on the method i) and a PL-RS determined based on the method ii). For example, based on the value of the 1-bit indicator field being is a first value (e.g., 0 or 1), the DL RS related to the DMRS of the PDCCH order may be indicated as the PL-RS (method i). For example, based on the value of the 1-bit indicator field being a second value (e.g., 1 or 0), an SS/PBCH block based on the PDCCH order may be indicated as the PL-RS (method ii). Here, the SS/PBCH block based on the PDCCH order may mean an SS/PBCH block indicated based on an SSB index (i.e., an SS/PBCH index field) in the PDCCH order. In the present disclosure, the PDCCH order may be interpreted/replaced by DCI or DCI format. According to the present embodiment, the base station may trigger the RACH (for two TA acquisition) and at the same time may indicate the UE to follow the method i or follow the method ii. That is, when the base station performs the cross-TRP RACH triggering (regardless of intra-cell M-DCI environment or inter-cell M-DCI environment), the base station may indicate the UE to follow the method ii through the PDCCH order. This can solve the PL-RS mismatch problem of the UE during RACH transmission.

The configuration/activation/indication may be based on cell-specific signaling distinguished per specific component carrier (CC)/cell.

According to the proposal 1, the following effect is derived.

When two TA operation is performed in a CC/BWP in which the UE performs an M-DCI-based M-TRP operation, the base station may indicate the UE to determine the PL-RS for the PDCCH-ordered RACH through the method ii. This can resolve the PL-RS mismatch problem of the terminal for RACH transmission.

If the two TA operation is not performed or an S-TRP operation is performed in the CC/BWP in which the UE performs the M-DCI based M-TRP operation, the base station may indicate the UE to determine the PL-RS as a PL-RS for the legacy PDCCH-ordered RACH in the CC/BWP through the method i. This can eliminate ambiguity in determining a PL-RS for the PDCCH-ordered RACH of the UE (regardless of the intra-cell M-DCI environment or the inter-cell M-DCI environment).

The embodiments can operate based on combinations of specific embodiments.

An example of the UE (base station) operation based on at least one of the above-described embodiments (e.g., at least one of the proposal 1 and the additional embodiments) is as follows.

1) A UE (a base station) receives (transmits) a configuration related to two TAGs (two TAs) in a specific serving cell. For example, the configuration may include configuration/activation/indication (by RRC/MAC/DCI) for the method i or/and the method ii of the proposal 1 for determining a PL-RS of a PDCCH-ordered RACH.

2) The UE (the base station) receives (transmits) a PDCCH order message that triggers Contention Free Random Access (CFRA) to acquire TA related to the two TAGs. For example, the PDCCH order may include a 1-bit indicator field representing the method i or the method ii described above.

3) The UE (the base station) transmits (receives) a CFRA-based PRACH based on the message. A PL-RS for determining transmission power of the PRACH may be based on the proposal 1.

4) The UE (the base station) receives (transmits) a random access response (RAR).

A TA value for one of the two TAGs may be indicated based on a TA command field (e.g., Timing Advance Command field in MAC payload for the RAR) in the RAR.

The UE/base station operation is merely an example, and each operation (or step) is not necessarily essential. An operation related to PRACH transmission of the UE according to the above-described embodiments may be omitted or added depending on the UE/base station implementation method.

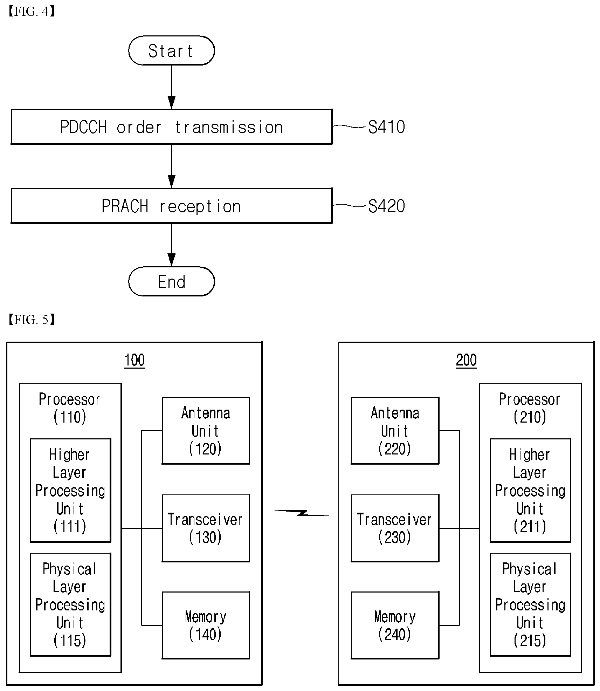

From an implementation perspective, operations of the UE/base station according to the above-described embodiments (e.g., operations based on the proposal 1) can be processed by a device (e.g., processors 110 and 210 of FIG. 5) of FIG. 5 to be described below.

Further, the operations of the UE/base station according to the above-described embodiments (e.g., operations based on the proposal 1) can be stored in a memory (e.g., memories 140 and 240 of FIG. 5) in the form of commands/programs (e.g., instructions, executable codes) for running at least one processor (e.g., processors 110 and 210 of FIG. 5).

Below, the above-described embodiments are described in detail from a UE/base station operation perspective with reference to FIGS. 3 and 4. Methods described below are merely distinguished for convenience of explanation. Thus, it is obvious that partial configuration of any method can be substituted or combined with partial configuration of another method.

FIG. 3 is a flowchart illustrating a method performed by a user equipment according to an embodiment of the present disclosure.

Referring to FIG. 3, a method performed by a user equipment according to an embodiment of the present disclosure comprises a PDCCH order reception step S310 and a PRACH transmission step S320.

In the step S310, the UE receives a physical downlink control channel (PDCCH) order related to an initiation of a random access procedure from a base station.

For example, the random access procedure may be a contention-free random access (CFRA) procedure triggered by the PDCCH order.

In the step S320, the UE transmits a Physical Random Access Channel (PRACH) to the base station.

For example, the PRACH may be related to i) an inter-cell multi-TRP operation or ii) an intra-cell multi-TRP operation.

According to an embodiment, a PathLoss-Reference Signal (PL-RS) for the PRACH may be indicated based on a value of a 1-bit indicator field in the PDCCH order. The present embodiment may be based on the proposal 1. For example, the PDCCH order may be based on a DCI format (e.g., DCI format 1_0). The 1-bit indicator field may be based on a field (e.g., 1-bit PRACH association indicator field) in the DCI format.

Specifically, the PL-RS may be indicated as follows based on a value of the 1-bit indicator field.

For example, based on the value of the 1-bit indicator field being 0, a DownLink Reference Signal (DL RS) related to a DeModulation-Reference Signal (DM-RS) of the PDCCH order may be indicated as the PL-RS. The DL RS may be QCLed (quasi co-located) with the DM-RS of the PDCCH order.

For example, based on the value of the 1-bit indicator field being 1, a Synchronization Signal/Physical Broadcast Channel block (SS/PBCH block) based on the PDCCH order may be indicated as the PL-RS. The SS/PBCH block may be indicated by an SS/PBCH index (SS/PBCH index) field of the PDCCH order.

In an inter-cell M-TRP operation, a problem related to PL-RS mismatch may not occur. Considering this, it may be considered to limit the scope of application of the PL RS indication operation based on the proposal 1 to a case where an additional Physical Cell Identity (PCI) is not configured. According to an embodiment, based on information related to an additional PCI being not configured, the PL-RS may be indicated based on the value of the 1-bit indicator field.

According to an embodiment, it may be assumed that information related to an additional Physical Cell Identity (PCI) is configured to the UE. In this case, the PL-RS is as follows. For example, based on the PRACH being related to a PCI of a serving cell, the PL-RS may be based on the DL RS. That is, the PRACH transmission may depend on the DL RS. For example, based on the PRACH being related to the additional PCI, the PL-RS may be based on the SS/PBCH block. That is, the PRACH transmission may depend on the SS/PBCH block. The PCI of the serving cell may be related to the reception of the PDCCH order. The additional PCI may be different from the PCI of the serving cell.

According to an embodiment, a transmission power for the PRACH may be determined based on a pathloss (PL) (see Equation 1). The pathloss may be determined based on the DL RS or the SS/PBCH block.

The method may further comprise a step of receiving first configuration information. Specifically, the UE receives first configuration information from the base station. The step of receiving the first configuration information may be performed before S310. For example, a first Timing Advance Group (TAG) ID and a second TAG ID may be configured based on the first configuration information. The first TAG ID may be related to a first TAG. The second TAG ID may be related to a second TAG. The first TAG and the second TAG may be related to the serving cell. For example, the first configuration information may be based on a higher layer parameter ServingCellConfig. The first TAG ID and the second TAG ID may be based on tag-Id and tag2-Id in the parameter ServingCellConfig.

The method may further comprise a step of receiving second configuration information. Specifically, the UE receives second configuration information from the base station. The step of receiving the second configuration information may be performed before S310. For example, first COntrol REsource SETs (CORESETs) related to a first CORESET pool index and second CORESETs related to a second CORESET pool index may be configured based on the second configuration information. For example, the second configuration information may be configuration information including a list of CORESETs. Specifically, the second configuration information may be based on a higher layer parameter PDCCH-config including controlResourceSetToAddModList.

The operations based on the steps S310 and S320, the first configuration information reception step, and the second configuration information reception step described above may be implemented by a device of FIG. 5. For example, a UE 200 may control one or more transceivers 230 and/or one or more memories 240 so as to perform the operations based on the steps S310 and S320, the first configuration information reception step, and the second configuration information reception step.

Below, the above-described embodiments are described in detail from a perspective of base station operation.

Steps S410 and S420, a first configuration information transmission step, and a second configuration information transmission step described below correspond to the steps S310 and S320, the first configuration information reception step, and the second configuration information reception step described with reference to FIG. 3. Considering the above correspondence, redundant description is omitted. That is, the detailed description of the base station operation described below can be replaced with the description/embodiment of FIG. 3 corresponding to the base station operation.

For example, the description/embodiment of the steps S310 and S320 of FIG. 3 can be additionally applied to the base station operation of the steps S410 and S420 described below.

For example, the description/embodiment of the first configuration information reception step and the second configuration information reception step can be additionally applied to the base station operation of the first configuration information transmission step and the second configuration information transmission step described below.

FIG. 4 is a flowchart illustrating a method performed by a base station according to another embodiment of the present disclosure.

Referring to FIG. 4, a method performed by a base station according to another embodiment of the present disclosure comprises a PDCCH order transmission step S410 and a PRACH reception step S420.

In the step S410, the base station transmits a physical downlink control channel (PDCCH) order related to an initiation of a random access procedure to a UE.

In the step S420, the base station receives a Physical Random Access Channel (PRACH) from the UE.

The method may further comprise a step of transmitting first configuration information. Specifically, the base station transmits first configuration information to the UE. The step of transmitting the first configuration information may be performed before S410.

The method may further comprise a step of transmitting second configuration information. Specifically, the base station transmits second configuration information to the UE The step of transmitting the second configuration information may be performed before S420.

The operations based on the steps S410 and S420, the first configuration information transmission step, and the second configuration information transmission step described above may be implemented by a device of FIG. 5. For example, a base station 100 may control one or more transceivers 130 and/or one or more memories 140 so as to perform the operations based on the steps S410 and S420, the first configuration information transmission step, and the second configuration information transmission step.

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) comprising:

   receiving a Physical Downlink Control CHannel (PDCCH) order related to an initiation of a random access procedure; and
   transmitting a Physical Random Access Channel (PRACH),
   wherein a PathLoss-Reference Signal (PL-RS) for the PRACH is indicated based on a value of a 1-bit indicator field in the PDCCH order,
   wherein, based on the value of the 1-bit indicator field being 0, a DownLink Reference Signal (DL RS) related to a DeModulation-Reference Signal (DM-RS) of the PDCCH order is indicated as the PL-RS,
   wherein, based on the value of the 1-bit indicator field being 1, a Synchronization Signal/Physical Broadcast Channel block (SS/PBCH block) based on the PDCCH order is indicated as the PL-RS.

2. The method of claim 1, wherein a transmission power for the PRACH is determined based on a pathloss (PL), and wherein the PL is determined based on the DL RS or the SS/PBCH block.

3. The method of claim 1, wherein the DL RS is quasi-collocated with the DM-RS of the PDCCH order.

4. The method of claim 1, wherein the SS/PBCH block is indicated by an SS/PBCH index field of the PDCCH order.

5. The method of claim 1, further comprising receiving first configuration information, wherein a first Timing Advance Group (TAG) ID and a second TAG ID are configured based on the first configuration information.

6. The method of claim 1, further comprising receiving second configuration information, wherein first COntrol REsource SETs (CORESETs) related to a first CORESET pool index and second CORESETs related to a second CORESET pool index are configured based on the second configuration information.

7. The method of claim 1, wherein, based on information related to an additional Physical Cell Identity (PCI) being not configured, the PL-RS is indicated based on the value of the 1-bit indicator field.

8. The method of claim 1, wherein information related to an additional Physical Cell Identity (PCI) is configured,

   wherein, based on the PRACH being related to a PCI of a serving cell, the PL-RS is based on the DL RS, and
   wherein, based on the PRACH being related to the additional PCI, the PL-RS is based on the SS/PBCH block.

9. The method of claim 8, wherein the PCI of the serving cell is related to the reception of the PDCCH order, and wherein the additional PCI is different from the PCI of the serving cell.

10. The method of claim 1, wherein the PRACH is related to i) an inter-cell multi-TRP operation or ii) an intra-cell multi-TRP operation.

11. The method of claim 1, wherein the random access procedure is a contention-free random access (CFRA) procedure triggered by the PDCCH order.

12. A user equipment (UE) comprising:

   one or more transceivers;
   one or more processors; and

one or more memories connected to the one or more processors and storing instructions,
wherein the instructions, based on being executed by the one or more processors, configure the one or more processors to perform all steps of a method according to any one of claims 1 to 11.

13. A device comprising:

one or more memories; and
one or more processors operably connected to the one or more memories,
wherein the one or more memories store instructions that, based on being executed by the one or more processors, configure the one or more processors to perform all steps of a method according to any one of claims 1 to 11.

14. One or more non-transitory computer readable mediums storing instructions,
wherein the instructions executable by one or more processors configure one or more processors to perform all steps of a method according to any one of claims 1 to 11.

15. A method performed by a base station comprising:

transmitting a Physical Downlink Control CHannel (PDCCH) order related to an initiation of a random access procedure; and
receiving a Physical Random Access Channel (PRACH),
wherein a PathLoss-Reference Signal (PL-RS) for the PRACH is indicated based on a value of a 1-bit indicator field in the PDCCH order,
wherein, based on the value of the 1-bit indicator field being 0, a DownLink Reference Signal (DL RS) related to a DeModulation-Reference Signal (DM-RS) of the PDCCH order is indicated as the PL-RS,
wherein, based on the value of the 1-bit indicator field being 1, a Synchronization Signal/Physical Broadcast Channel block (SS/PBCH block) based on the PDCCH order is indicated as the PL-RS.

16. A base station comprising:

one or more transceivers;
one or more processors; and
one or more memories connected to the one or more processors and storing instructions,
wherein the instructions, based on being executed by the one or more processors, configure the one or more processors to perform all steps of a method according to claim 15.

【FIG. 1】

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

【FIG. 2】

| | | |
|---|---|---|
| TAG ID | Timing Advance Command | Oct 1 |

【FIG. 3】

Start

PDCCH order reception — S310

PRACH transmission — S320

End

【FIG. 4】

```
           ┌─────────┐
           │  Start  │
           └────┬────┘
                │
                ▼
┌──────────────────────────────┐
│  PDCCH order transmission     │──── S410
└───────────────┬──────────────┘
                │
                ▼
┌──────────────────────────────┐
│      PRACH reception           │──── S420
└───────────────┬──────────────┘
                │
                ▼
           ┌─────────┐
           │   End   │
           └─────────┘
```

【FIG. 5】

## INTERNATIONAL SEARCH REPORT

| International application No. |
| --- |
| **PCT/KR2024/011887** |

### A. CLASSIFICATION OF SUBJECT MATTER

**H04W 74/0833**(2024.01)i; **H04W 74/00**(2009.01)i; **H04W 52/24**(2009.01)i; **H04W 52/32**(2009.01)i; **H04W 72/231**(2023.01)i; **H04W 56/00**(2009.01)i; **H04W 72/0457**(2023.01)i; **H04L 5/00**(2006.01)i

According to International Patent Classification (IPC) or to both national classification and IPC

### B. FIELDS SEARCHED

Minimum documentation searched (classification system followed by classification symbols)

H04W 74/0833(2024.01); H04L 1/08(2006.01); H04L 5/00(2006.01); H04W 16/04(2009.01); H04W 36/00(2009.01); H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 액세스 절차(random access procedure), 물리 하향링크 제어채널(physical downlink control channel), 경로 손실(pathloss), 참조 신호(reference signal), 복조 참조 신호(demodulation reference signal), 동기신호/물리 브로드캐스트 채널 블록(synchronization signal/physical broadcast channel block), 명령(order)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2023-063706 A1 (LG ELECTRONICS INC.) 20 April 2023 (2023-04-20)<br>See paragraphs [0113]-[0120], [0205], [0239] and [0271]-[0283]; and claims 1-9. | 1-16 |
| Y | WO 2020-033887 A1 (INTEL CORPORATION) 13 February 2020 (2020-02-13)<br>See page 4, line 11 - page 5, line 26 and page 7, lines 1-14; and claims 1-7. | 1-16 |
| Y | WO 2022-270964 A1 (SAMSUNG ELECTRONICS CO., LTD.) 29 December 2022 (2022-12-29)<br>See claims 1-5. | 5,7-9 |
| A | WO 2022-077478 A1 (HUAWEI TECHNOLOGIES CO., LTD.) 21 April 2022 (2022-04-21)<br>See page 1, line 25 - page 63, line 31; claims 1-33; and figures 1a-7. | 1-16 |
| A | US 2021-0058835 A1 (QUALCOMM INCORPORATED) 25 February 2021 (2021-02-25)<br>See paragraphs [0027]-[0111]; claims 1-30; and figures 1-13. | 1-16 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 December 2024** | **02 December 2024** |

| Name and mailing address of the ISA/KR | Authorized officer |
| --- | --- |
| **Korean Intellectual Property Office<br>Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/011887** |

| Patent document cited in search report | | | Publication date (day/month/year) | Patent family member(s) | | | Publication date (day/month/year) |
| --- | --- | --- | --- | --- | --- | --- | --- |
| WO | 2023-063706 | A1 | 20 April 2023 | EP | 4418784 | A1 | 21 August 2024 |
|  |  |  |  | KR | 10-2024-0090170 | A | 21 June 2024 |
| WO | 2020-033887 | A1 | 13 February 2020 | CN | 112567870 | A | 26 March 2021 |
|  |  |  |  | EP | 3811714 | A1 | 28 April 2021 |
|  |  |  |  | US | 2021-0314885 | A1 | 07 October 2021 |
|  |  |  |  | US | 2024-0314709 | A1 | 19 September 2024 |
| WO | 2022-270964 | A1 | 29 December 2022 | EP | 4327600 | A1 | 28 February 2024 |
|  |  |  |  | KR | 10-2024-0023590 | A | 22 February 2024 |
|  |  |  |  | US | 2024-0250798 | A1 | 25 July 2024 |
| WO | 2022-077478 | A1 | 21 April 2022 | CN | 117044139 | A | 10 November 2023 |
|  |  |  |  | EP | 4231565 | A1 | 23 August 2023 |
|  |  |  |  | EP | 4231565 | A4 | 06 December 2023 |
|  |  |  |  | US | 2023-0254030 | A1 | 10 August 2023 |
| US | 2021-0058835 | A1 | 25 February 2021 | CN | 114258658 | A | 29 March 2022 |
|  |  |  |  | CN | 114258658 | B | 28 June 2024 |
|  |  |  |  | EP | 4018717 | A1 | 29 June 2022 |
|  |  |  |  | US | 11218921 | B2 | 04 January 2022 |
|  |  |  |  | WO | 2021-034812 | A1 | 25 February 2021 |

Form PCT/ISA/210 (patent family annex) (July 2022)